# EUROPÄISCHE PATENTANMELDUNG

(11) **EP 2 392 524 A1**
(43) Veröffentlichungstag der Anmeldung: **07.12.2011**
(21) Anmeldenummer: 11164625.3
(22) Anmeldetag: 03.05.2011
(51) Int. Cl.: B65G 1/04, B65G 1/06

(54) **Kanallager mit Laufschienen zur Führung eines Verteilerfahrzeugs**

(30) Priorität: 01.06.2010 DE 102010029563
(71) Anmelder: BITO-Lagertechnik Bittmann GmbH, 55590 Meisenheim (DE)
(72) Erfinder: Kemperdick, Arthur, 55758, Niederwörresbach (DE)
(74) Vertreter: Richardt Patentanwälte

(57) **Zusammenfassung**

Die Erfindung betrifft ein Kanallager mit einem Kanal mit einer ersten und einer zweiten Ebene, wobei die erste Ebene eine erste und eine zweite Laufschiene (112) aufweist, wobei die erste Laufschiene (112) parallel zu der zweiten Laufschiene (112) angeordnet ist und die erste und zweite Laufschiene (112) zur Führung einer Fahrbewegung eines Verteilerfahrzeugs ausgebildet sind, wobei die zweite Ebene zur Lagerung von Ladungsträgern (104) ausgebildet ist und das Verteilerfahrzeug zum räumlichen Versetzen der Ladungsträger (104) ausgebildet ist, wobei die erste und zweite Laufschiene (112) jeweils durch in Längsrichtung (108) hintereinander angeordnete Segmente (301;302;304;308) gebildet wird, wobei durch jeweils aneinander stoßende Segmente Stoßverbindungen (308) gebildet werden, wobei die Stoßverbindungen (308) der Segmente (301;302) der ersten Laufschiene (112) in Längsrichtung räumlich versetzt zu den Stoßverbindungen (308) der Segmente (304;306) der zweiten Laufschiene (112) angeordnet sind.

## Beschreibung

Die Erfindung betrifft ein Kanallager sowie ein Segment für ein Kanallager und eine Konsole für ein Kanallager.

Aus dem Stand der Technik sind verschiedene Vorrichtungen bekannt, mittels welcher Stückgut, beispielsweise auf Paletten angeordnet, gelagert werden kann. So beschreibt beispielsweise die DE 38 40 648 A1 eine Ein-/Aus-Hochregallager-Einrichtung mit einer Mehrzahl von Regalkanälen in einer Ebene mit einer Mehrzahl von übereinander liegenden Ebenen von Kanälen mit zugeordneten Förderzeugen.

Allgemein sind Kanallager Regallager für Stückgut, bei denen eine Vielzahl von Ladeeinheiten hintereinander angeordnet in einzelnen Kanälen gelagert werden können. Um nun ein Umlagern, Einlagern oder Auslagern von Stückgut zu ermöglichen, kommt ein Umsetzgerät in Form eines Verteilerfahrzeugs zum Einsatz, welches auch als Shuttle, Kanalfahrzeug oder Satellitenfahrzeug bezeichnet wird. Das Verteilerfahrzeug ist dazu ausgebildet, Ladungsträger zu unterfahren, anzuheben und innerhalb des Kanals im angehobenen Zustand zu bewegen. So können Einlagerungen und Auslagerungen durch Verfahren der Ladungsträger im Kanal vorgenommen werden.

Demgegenüber liegt der Erfindung die Aufgabe zugrunde, ein verbessertes Kanallager, ein verbessertes Segment für ein Kanallager und eine verbesserte Konsole für ein Kanallager zu schaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Es wird ein Kanallager mit zumindest einem Kanal mit zumindest einer ersten und einer zweiten Ebene angegeben, wobei die erste Ebene zumindest eine erste und eine zweite Laufschiene aufweist, wobei die erste Laufschiene parallel zur zweiten Laufschiene angeordnet ist und die erste und zweite Laufschiene zur Führung einer Fahrbewegung eines Verteilerfahrzeugs ausgebildet sind. Die zweite Ebene dient der Lagerung von Ladungsträgern, wobei das Verteilerfahrzeug zum räumlichen Versetzen der Ladungsträger ausgebildet ist.

Unter "Ladungsträger" werden beispielsweise Paletten oder verschiedenste Arten von Vorrichtungen verstanden, welche in der Lage sind, gewünschtes zu lagerndes Stückgut aufzunehmen bzw. abzustützen.

Die erste und zweite Laufschiene sind jeweils durch in Längsrichtung hintereinander angeordnete Segmente gebildet, wobei durch jeweils aneinanderstoßende Segmente Stoßverbindungen gebildet werden. Dabei sind die Stoßverbindungen der Segmente der ersten Laufschiene in Längsrichtung der Laufschiene gesehen räumlich versetzt zu den Stoßverbindungen der Segmente der zweiten Laufschiene angeordnet.

In anderen Worten sind die Stoßverbindungen der ersten und zweiten Laufschiene in Laufrichtung gesehen nicht auf gleicher Höhe angeordnet, sondern zueinander versetzt, sodass das Verteilerfahrzeug beim Verfahren entlang der Laufschienen nicht auf beiden Seiten gleichzeitig die Stöße überfährt. Dies hat den Vorteil, dass die mechanische Belastung des Verteilerfahrzeugs und des Regals erheblich reduziert wird, da beim Verfahren des Verteilerfahrzeugs aufgrund der Stoßverbindungen resultierende Vibrationen des Verteilerfahrzeugs minimiert werden. Solche mechanischen Belastungen können beispielsweise die Elektronik und/oder Mechanik von Verteilerfahrzeugen beschädigen oder zerstören, zu Fehlfunktionen führen oder jedoch grundsätzlich die Lebensdauer reduzieren. Aufgrund dessen, dass die Stoßverbindungen der Segmente der ersten Laufschiene in Längsrichtung räumlich versetzt zu den Stoßverbindungen der Segmente der zweiten Laufschiene angeordnet sind, tritt jedoch niemals die Situation auf, dass einander unmittelbar gegenüberliegende Laufräder des Verteilerfahrzeugs gleichzeitig jeweils eine Stoßverbindung überfahren - eine Vibration kann so lediglich auf einer Seite des Verteilerfahrzeugs stattfinden.

Vorzugsweise ist es sogar so, dass die Stoßverbindungen der Segmente der ersten und zweiten Laufschiene so zueinander angeordnet sind, dass bezogen auf alle Laufräder des Verteilerfahrzeugs gewährleistet ist, dass nie mehr als ein Laufrad des Verteilerfahrzeugs gleichzeitig eine der Stoßverbindungen berührt oder überfährt.

Im Umkehrschluss kann damit die mechanische Belastung des Verteilerfahrzeugs auch dadurch minimiert werden, indem in geeigneter Weise die Laufräder des Verteilerfahrzeugs so zueinander versetzt angeordnet werden, dass beliebig in Bezug auf die Segmente vorhandene Stoßverbindungen nie gleichzeitig von mehr als einem Laufrad überfahren bzw. berührt werden. Dies ermöglicht sogar, dass bei entsprechender Modifikation der räumlichen Anordnung der Laufräder des Verteilerfahrzeugs Stoßverbindungen der Laufschienen auftreten können, welche in Laufrichtung gesehen auf gleicher Höhe zueinander angeordnet sind.

Nach einer weiteren Ausführungsform der Erfindung ist die zweite Ebene über der ersten Ebene angeordnet. Vorzugsweise weist die erste Ebene eine waagrechte Führungsebene zur Führung der Fahrbewegung des Verteilerfahrzeugs senkrecht zur Bewegungsebene des Verteiferfahrzeugs und zumindest eine senkrechte Führungsebene für eine seitliche Führung des Verteilerfahrzeugs auf, wobei die zweite Ebene eine Auflageebene für die Ladungsträger umfasst und die Segmente sowohl die erste als auch die zweite Ebene aufweisen. Damit kann in besonders kompakter Weise ein entsprechendes Kanallager bereitgestellt werden, wobei stets gewährleistet ist, dass eine Verfahrung des Verteilerfahrzeugs innerhalb eines entsprechenden Kanals in optimal geführter Weise realisiert werden kann.

Vorzugsweise sind dabei die erste und zweite Ebene einstückig miteinander ausgebildet, sodass ein entsprechender Montageaufwand des Kanallagers minimiert wird. Es sei darauf verwiesen, dass sich der Begriff "Ebene" auf das Profil der nebeneinander laufenden Schienen innerhalb eines Kanals bezieht, wobei beliebig viele Kanäle übereinander oder nebeneinander angeordnet sein können.

Nach einer weiteren Ausführungsform der Erfindung weisen die Stoßverbindungen eine Schäftung auf. Beispielsweise kann diese Schäftung durch einen zickzackförmigen Verlauf der Stoßverbindungen gebildet werden. Durch den Zickzackverlauf wird zunächst die Biegesteifigkeit der benachbarten Schienensegmente erhöht, da diese bei Durchbiegung entlang der Zickzackkanten aneinander stoßen. Ferner hat die Verwendung eines zickzackförmigen Verlaufs der Stoßverbindungen den Vorteil, dass Kräfte in Querrichtung der Segmente in optimaler Weise an den Stoßverbindungen auf beide aneinander grenzende Segmente gleichmäßig übertragen werden, da aufgrund der Zickzackform gewährleistet ist, dass in Querrichtung der Segmente gesehen ständig eines der Segmente bezüglich des anderen Segments als Anschlag wirkt. Damit wird die mechanische Haltbarkeit und Stabilität eines entsprechenden Kanallagers signifikant erhöht.

Nach einer weiteren Ausführungsform der Erfindung umfasst das Kanallager ferner Konsolen, wobei die Konsolen zur Fixierung der Laufschienen an Rahmenverstrebungen des Kanals ausgebildet sind. Vorzugsweise kommen hier Konsolen zum Einsatz, welche beispielsweise in die entsprechenden Rahmenverstrebungen des Kanals eingehängt oder eingeschraubt werden, sodass hiermit eine einfache Montierbarkeit der Segmente an den Konsolen gewährleistet ist.

Nach einer Ausführungsform der Erfindung sind die Konsolen nun so angeordnet, dass im Bereich der Stoßverbindungen die jeweils aneinander stoßenden Segmente beide zumindest teilweise auf der Konsole zu liegen kommen. Dies kann insbesondere in Verbindung mit einem zickzackförmigen Verlauf der Stoßverbindungen verknüpft werden, wobei insbesondere dieser Verlauf die Konsole zumindest einmal in jeder Richtung überschreitet, sodass entsprechend aneinander stoßende Schienensegmente beidseitig auf die Konsole aufgelegt werden können. Dies vereinfacht die Montage der Schienenelemente und die Herstellung der Konsole. Ferner werden auf benachbarte Segmente auftretende Kräfte gleichmäßig auf die Konsolen verteilt.

Ein weiterer Vorteil der Verwendung entsprechender Konsolen ist, dass einzelne Schienensegmente unabhängig von benachbarten Schienensegmenten ausgetauscht und entfernt werden können. Nichtsdestotrotz ist grundsätzlich gewährleistet, dass die übrigen Schienensegmente sicher am Kanallager angeordnet sind. Dies vereinfacht beispielsweise die Reparatur einzelner Schienensegmente, indem diese Schienensegmente individuell aus dem Kanallager entfernt werden können, ohne Rücksicht auf das Vorhandensein benachbarter Schienenelemente.

Nach einer Ausführungsform der Erfindung sind die Konsolen scheibenförmig ausgebildet. Insbesondere wiederum bei einem zickzackförmigen Verlauf der Stoßverbindungen, wobei im Bereich der Stoßverbindungen die jeweils aneinander stoßende Segmente beide zumindest teilweise auf der Konsole zu liegen kommen, hat dies den Vorteil, dass trotz der Gewährleistung einer permanenten Auflage unmittelbar aneinander stoßender Segmente auf die Konsolen ein minimaler Materialaufwand in Bezug auf die Konsolen gewährleistet werden kann. Anstatt der Bereitstellung einer Vielzahl von Konsolen, zum Beispiel zwei Konsolen pro Segment bzw. anstatt der Bereitstellung von sehr breiten kastenförmigen Konsolen zur Lagerung zweiter unmittelbar aneinander stoßender Segmente, genügt es somit, eine einzelne scheibenförmige Konsole bereitzustellen, welche bei ausreichend hoher mechanischer Stabilität nichtsdestotrotz den gesamten Materialaufwand und das Gesamtgewicht eines entsprechenden Kanallagers reduziert.

Nach einer weiteren Ausführungsform der Erfindung weisen die Konsolen ferner zumindest drei Befestigungspunkte und eine Aussparung auf, wobei die Befestigungspunkte zur kraftschlüssigen Fixierung der Segmente über Winkelprofile und die Aussparung zur teilweisen Aufnahme von zumindest einem Segment senkrecht zur Bewegungsebene des Verteilerfahrzeugs ausgebildet ist. Damit kann in optimaler Weise gewährleistet werden, dass die Segmente über die Konsolen in den Rahmenverstrebungen des Kanals festgelegt werden können. Das freie Spiel von Segmenten wird dabei gegen Null gehend minimiert, was wiederum die Gesamtstabilität und Haltbarkeit des Kanallagers beträchtlich erhöht.

Es sei darauf verwiesen, dass die Erfindung jedoch nicht auf drei Befestigungspunkte beschränkt ist. Möglich ist auch die Verwendung von weniger als drei Befestigungspunkten. Entsprechende Befestigungsmittel können dabei von den Segmenten abstehen oder in diesen versenkt sein.

Nach einer Ausführungsform der Erfindung weist die erste Ebene zwei senkrechte Führungsebene für die seitliche Führung des Verteilerfahrzeugs auf, wobei die waagrechte Führungsebene und die zwei senkrechten Führungsebenen und die Auflageebene durch die drei Befestigungspunkte und die Aussparung an den Konsolen voneinander abgegrenzt festgelegt sind. Vorzugsweise sind dabei die Konsolen zur formschlüssigen Anlage der entsprechenden Segmente im montierten Zustand ausgebildet. Dies unterstützt weiterhin in wesentlicher Weise eine permanente und sichere vibrationsunterbindende Festlegung der Segmente an den Konsolen.

In einem weiteren Aspekt betrifft die Erfindung ein Segment für ein obig beschriebenes Kanallager sowie eine Konsole für ein obig beschriebenes Kanallager.

Im Folgenden werden bevorzugte Ausführungsformen der Erfindung anhand der Zeichnungen näher erläutert. Es zeigen:
- Figur 1: eine schematische perspektivische Darstellung eines Kanallagers,
- Figur 2: eine schematische Querschnittansicht eines Kanals eines Kanallagers,
- Figur 3: eine schematische Längsansicht eines Kanals eines Kanallagers,
- Figur 4: eine schematische Ansicht einer Stoßverbindung von Segmenten,
- Figur 5: eine schematische Ansicht einer Stoßverbindung von Segmenten mit Konsolen,
- Figur 6: eine schematische Ansicht einer Laufschiene.

Im Folgenden werden einander ähnliche Elemente mit den gleichen Bezugszeichen gekennzeichnet.

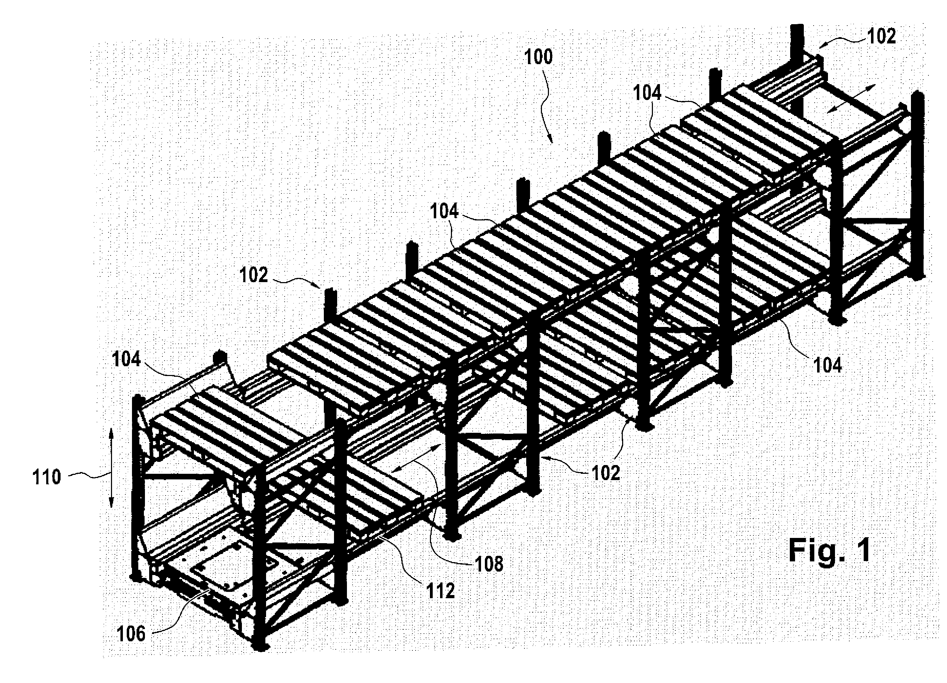

Die Figur 1 zeigt ein Kanallager 100 mit einem einzelnen Kanal mit einer in Figur 1 nicht näher ersichtlichen ersten und zweiten Ebene. Ersichtlich sind jedoch Laufschienen 112 zur Führung einer Fahrbewegung eines Verteilerfahrzeugs 106 in Richtung 108, also längs der Erstreckungsrichtung der Laufschienen 112.

In dem in Figur 1 gezeigten Kanal befinden sich eine Vielzahl von Ladungsträgern 104, im vorliegenden Fall Paletten. Das Verteilerfahrzeug 106 kann nun durch eine entsprechende Bewegung in Richtung 108 längs der Laufschienen 112 unterhalb einer Palette 104 bewegt werden, woraufhin die Palette 104 durch das Verteilerfahrzeug angehoben werden kann in Richtung 110, um daraufhin innerhalb des Kanals in Richtung 108 durch eine Bewegung des Verteüerfahrzeugs in Richtung 108 verfahren zu werden. Damit ist ein Einlagern und Auslagern der Paletten 104 mit deren in Figur 1 nicht ersichtlichem Stückgut möglich.

Ferner in Figur 1 ersichtlich, sind Rahmenverstrebungen 102, durch welche in Verbindung mit den Laufschienen 112 ein stabiler Gesamtverbund des Kanallagers 100 gebildet wird.

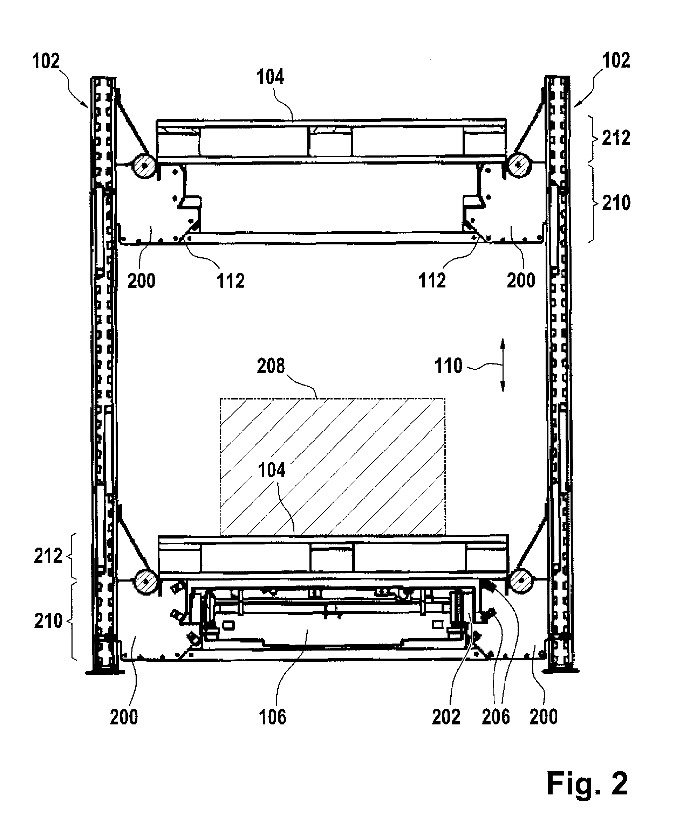

Die Figur 2 zeigt nun eine Querschnittansicht des Kanallagers 100. Deutlich ersichtlich sind wiederum Teile der senkrecht angeordneten Rahmenverstrebungen 102, in welchen Konsolen 200 fixiert sind. Diese Konsolen 200 dienen der Aufnahme und Fixierung der Laufschienen 112. In der Ausführungsform der Figur 2 kommt den Laufschienen 112 dabei eine zweifache Funktion zugute. Dies ist zum einen die Lagerung der Paletten 104 mit ihrem Stückgut 208 innerhalb der dadurch gebildeten Ebene 212, als auch die Führung einer Fahrbewegung des Verteilerfahrzeugs 106 senkrecht zur Bewegungsebene des Verteilerfahrzeugs. Außerdem dienen die Laufschienen 112 im vorliegenden Fall zur seitlichen Führung des Verteilerfahrzeugs 106. Mit seinen Laufrädern 202 stützt sich das Verteilerfahrzeug 106 auf den Laufschienen 112 ab.

Die Laufschienen 112 sind beispielsweise über Winkelprofile 206 an den Konsolen 200 befestigt.

Zur Bewegung einer Palette 104 wird, wie obig beschrieben, das Verteilerfahrzeug 106 unter die Palette 104 verfahren, um daraufhin in Richtung 110 angehoben zu werden, wodurch ein Anheben der Palette 104 von der Laufschiene 112 erfolgt. Die Palette 104 kann zusammen mit dem Verteilerfahrzeug 106 entlang der Laufschienen 112 verfahren werden, um die Palette 104 daraufhin an einer gewünschten Position wieder abzustellen.

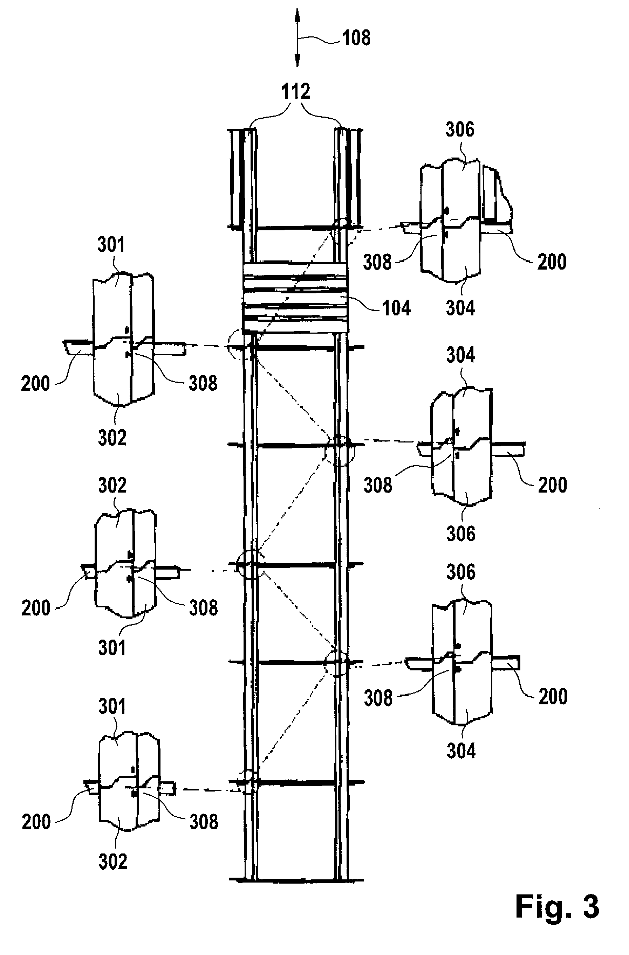

Die Figur 3 zeigt nun eine Längsschnittansicht eines Kanals eines bezüglich der Figuren 1 und 2 erläuterten Kanallagers. Ersichtlich sind wiederum die Laufschienen 112 sowie eine auf den Laufschienen 112 abgesetzte Palette 104. Wesentlich in Figur 3 ist nun, dass die Laufschienen 112 jeweils durch aneinanderstoßende einzelne Segmente gebildet werden. Die linke Laufschiene wird dabei durch Segmente 301 und 302 gebildet, welche an Stoßstellen 308 entsprechende Stoßverbindungen eingehen. Die rechte Laufschiene 112 wird in Figur 3 durch die Segmente 304 und 306 gebildet, welche an entsprechenden Stoßverbindungen 308 aneinander stoßen.

Skizziert in Figur 3 ist ferner, dass die Stoßverbindungen der Segmente 301 und 302 räumlich versetzt zu den Stoßverbindungen der Segmente 304 und 306 angeordnet sind. Beim Überfahren der Stoßverbindungen 308 mit einem entsprechenden Verteilerfahrzeug findet damit niemals ein gleichzeitiges Überfahren von Stößen 308 auf der linken bzw. der rechten Seite statt. Weist beispielsweise ein Verteilerfahrzeug die Breite der in Figur 3 gezeigten Palette 104 auf und wird dabei in der Ansicht der Figur 3 von oben nach unten bewegt, so überfahren Laufräder dieses Verteilerfahrzeugs zunächst die linke Stoßverbindung 308, anschließend die rechte Stoßverbindung 308, dann wiederum die linke Stoßverbindung 308 usw. Damit überfährt dieses Verteilerfahrzeug beim Verfahren entlang der Laufschienen 112 nie auf beiden Seiten gleichzeitig die Stöße, sondern versetzt, was die mechanische Belastung erheblich reduziert.

Es sei hier angemerkt, dass sowohl die mechanische Belastung des Verteilerfahrzeugs als auch die mechanische Belastung des Kanallagers reduziert wird. In Bezug auf das Verteilerfahrzeug wurde dies bereits obig im Detail erläutert. In Bezug auf das Kanallager kann dies anschaulich dadurch verstanden werden, indem vor Augen geführt wird, dass bei jedem Überfahren einer Stoßverbindung ein Impuls auf die Laufschienen wirkt. Wirkt nun ein Impuls gleichzeitig auf beide Laufschienen 112, d.h. links und rechts, so hat dieser die doppelte Intensität im Vergleich zu einem Impuls, welcher lediglich einseitig auf eine entsprechende Führungsschiene 112 wirken würde. Ein solch doppelter Impuls macht sich jedoch als merkbarer Ruck und ggf. als ungewünschte Vibration bemerkbar, welche auf das Kanallager wirkt. Durch die Halbierung des Impulses wird damit die mechanische Belastung des Kanallagers halbiert.

Ferner in Figur 3 ersichtlich ist eine Schäftung der Stoßverbindungen 308. Im Detail wird diese Schäftung durch einen zickzackförmigen Verlauf der Stoßverbindungen 308 gebildet. Die in Längsrichtung der Segmente gesehenen Endbereiche greifen damit teilweise ineinander, wodurch, wie obig erläutert, die Gesamtstabilität des Kanallagers erhöht wird.

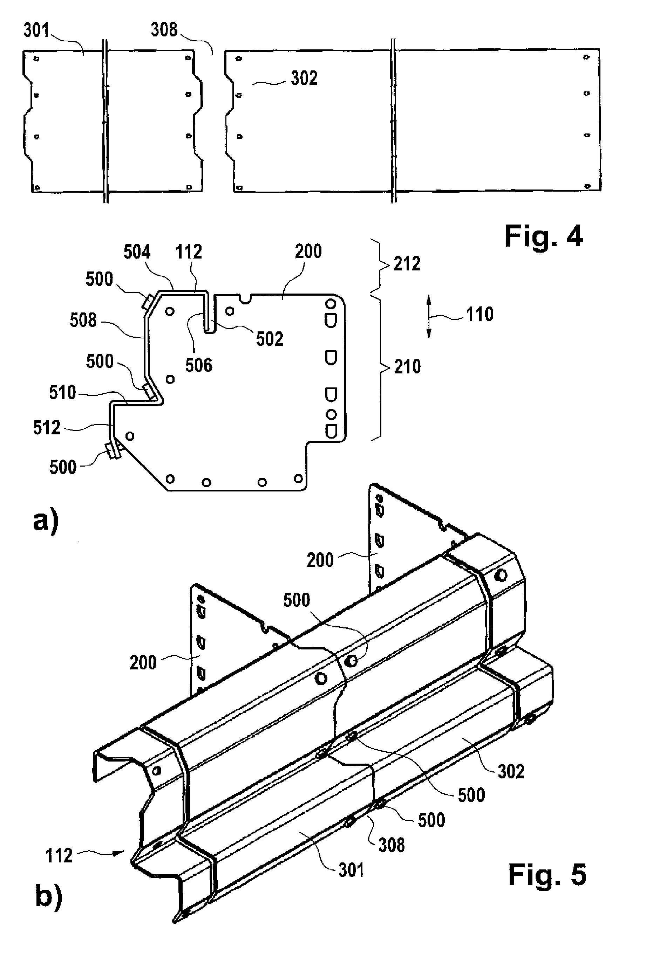

In Figur 4 ist der zickzackförmige Verlauf der Stoßverbindung 308 näher gezeigt. Beispielhaft ist in Figur 4 der Bereich der Stoßverbindung zwischen den Segmenten 301 und 302 (vgl. Figur 3) gezeigt. Beispielsweise senkrecht zur Längsrichtung der Segmente 301 und 302 wirkende Kräfte werden damit vom Segment 301 auf das Segment 302 und umgekehrt übertragen, wodurch Kräfte in verteilter Weise von den Segmenten aufgenommen werden können.

Es sei jedoch im vorliegenden Fall darauf verwiesen, dass selbstverständlich für eine Schäftung auch andere geometrische Formen zum Einsatz kommen können. Zum einen umfasst dies auch geschwungene, d.h. nicht zwingend eckige, Randbereiche der Stoßverbindungen 308 der Segmente 301 und 302. Des Weiteren ist es auch möglich, dass die Segmente 301 und 302 im Bereich der Stoßverbindung 308 keilförmig aufeinander zu liegen kommen. "Keilförmig" soll hierbei in Bezug auf die Richtung senkrecht zur Zeichenebene in Figur 4 gesehen werden. Ebenfalls senkrecht in Bezug auf die Zeichenebene in Figur 4, d.h. senkrecht zur Erstreckungsrichtung der Segmente, ist außerdem ein geometrisch variables Ineinandergreifen der Segmente 301 und 302 möglich. Damit findet insgesamt eine Verkeilung sowohl in Längs- als auch in Querrichtung und senkrecht zu den Segmenten 301 und 302 statt, womit die Freiheitsgrade der Beweglichkeit dieser Segmente im Wesentlichen zu Null reduziert wird.

Die Figur 5 zeigt eine schematische Ansicht einer Konsole 200 (Figur 5a) sowie eine schematische Ansicht von Konsolen 200 mit daran fixierten Segmenten 301 und 302 (Figur 5b). Die Konsolen 200 sind scheibenförmig ausgebildet und dienen zur Fixierung der Laufschienen an Rahmenverstrebungen des Kanals (vgl. Figur 3). Dabei sind die Konsolen so angeordnet, dass im Bereich der Stoßverbindungen 308 die jeweils aneinander stoßenden Segmente 301 und 302 beide zumindest teilweise auf der Konsole zu liegen kommen. Dies ist auch deutlich in Figur 3 ersichtlich, hier sowohl in Bezug auf die Segmente 301 und 302 als auch in Bezug auf die Segmente 306 und 308. Im Bereich der Stoßverbindungen 308 liegen sowohl Segment 301 und 302 als auch Segmente 306 und 304 jeweils auf derselben Konsole 200 auf.

Ferner in Figur 5a ersichtlich ist, dass die Konsole 200 drei Befestigungspunkte 500 und eine Aussparung 502 aufweist, wobei die Befestigungspunkte 500 zur kraftschlüssigen Fixierung der Segmente 301 bzw. 302 über Winkelprofile (vgl. Figur 2 Winkelprofil 206) ausgebildet sind. Ferner dient die Aussparung 502 zur teilweisen Aufnahme von zumindest einem der Segmente 301 bzw. 302 senkrecht zur Bewegungsebene eines entsprechenden Verteilerfahrzeugs, d.h. in Richtung 110.

Wie bereits in Figur 2 erläutert, umfasst das Kanallager eine erste und zweite Ebene 210 bzw. 212. In der Figur 5a umfasst die erste Ebene 210 zwei senkrechte Führungsebenen 508 und 512 für die seitliche Führung eines entsprechenden Verteilerfahrzeugs. Ferner umfasst die erste Ebene eine waagrechte Führungsebene 510 zur Führung der Fahrbewegung des Verteilerfahrzeugs senkrecht zur Bewegungsebene des Verteilerfahrzeugs. Die zweite Ebene 212 umfasst eine Auflageebene 504 für die Ladungsträger. Die erste und zweite Ebene sind dabei einstückig miteinander ausgebildet, d.h. die erste und zweite Ebene werden jeweils zusammen durch entsprechende Segmente 101 bzw. 102 gebildet.

In Figur 5a werden die zwei senkrechten Führungsebenen 508 und 512 und die waagrechte Führungsebene 510 und die Auflageebene 504 durch die drei Befestigungspunkte 500 und die Aussparung 502 der Konsole 200 voneinander abgegrenzt festgelegt. Konsole 200 ist außerdem zur formschlüssigen Anlage des Segments 301 bzw. 312 und damit der Laufschiene 112 im montierten Zustand an der Konsole 200 ausgebildet.

Hierzu greift ein Teil 506 des Segments 301 bzw. 302 in die Aussparung 502 der Konsole 200 ein.

Damit ergibt sich im montierten Zustand die in Figur 5b perspektivisch gezeigte Ansicht einer Laufschiene 112 bestehend aus den Segmenten 301 und 302, welche im Bereich der Stoßverbindung 308 einen zickzackförmigen Verlauf der Stoßverbindung aufweisen.

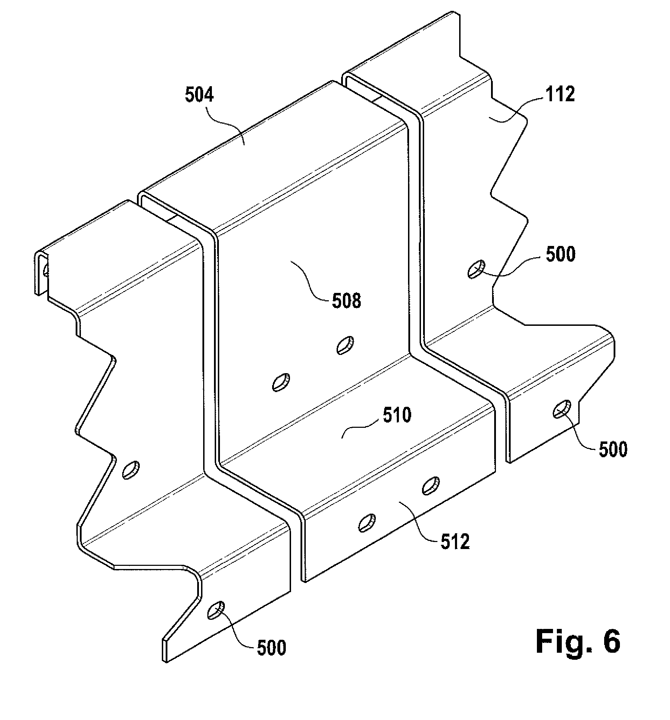

Die Figur 6 zeigt eine schematische Ansicht einer alternativen Laufschiene 112. Diese Laufschiene weist im Gegensatz zur in Fig. 5a gezeigten Laufschiene lediglich zwei Befestigungspunkte 500 auf, wobei die Befestigungspunkte 500 zur kraftschlüssigen Fixierung der Laufschiene an der hier nicht gezeigten Konsole ausgebildet sind. Im Fall der Fig. 6 dient lediglich die senkrechte Führungsebene 508 der seitlichen Führung eines entsprechenden Verteilerfahrzeugs, wobei die waagrechte Führungsebene 510 zur Führung der Fahrbewegung des Verteilerfahrzeugs senkrecht zur Bewegungsebene des Verteilerfahrzeugs dient. Die Auflageebene 504 ist wiederum zur Auflage des Ladungsträgers vorgesehen.

Da in der Fig. 6 die Befestigungspunkte 500 z.B. Schrauben als Befestigungsmittel aufnehmen können, könnten entsprechende Schraubenköpfe aus der Ebene der Führungsebenen 508 herausstehen. Aus diesem Grund weist ein entsprechendes Verteilerfahrzeug für die Laufschiene 112 immer Radpaare auf, wobei sich hiervon ein Rad an der Führungsebenen 508 oberhalb der Befestigungspunkte 500 abstützt und sich das andere Rad auf der waagrechten Führungsebene 510 abstützt. Die Ebene 512 hat in diesem Fall keine zwingende Führungsfunktion.

Durch das Abstützen eines Rades auf der Führungsebenen 508 wird gewährleistet, dass das Verteilerfahrzeug genügend großen Abstand von den Schraubenköpfen der Befestigungspunkte 500 der Ebene 508 hat und mit diesen nicht kollidiert.

### Bezugszeichenliste

- 100: Kanallager
- 102: Rahmenverstrebung
- 104: Palette
- 106: Verteilerfahrzeug
- 108: Richtung
- 110: Richtung
- 112: Laufschiene
- 200: Konsole
- 202: Rad
- 206: Winkelprofil
- 208: Stückgut
- 210: erste Ebene
- 212: zweite Ebene
- 301: Segment
- 302: Segment
- 304: Segment
- 306: Segment
- 308: Stoßverbindung
- 500: Befestigungspunkt
- 502: Aussparung
- 504: Auflageebene
- 506: Bereich
- 508: Führungsebene
- 510: Führungsebene
- 512: Führungsebene

## Patentansprüche

1. Kanallager (100) mit einem Kanal mit einer ersten (210) und einer zweiten (212) Ebene, wobei die erste Ebene (210) eine erste und eine zweite Laufschiene (112) aufweist, wobei die erste Laufschiene (112) parallel zu der zweiten Laufschiene (112) angeordnet ist und die erste und zweite Lauf schiene (112) zur Führung einer Fahrbewegung eines Verteilerfahrzeugs (106) ausgebildet sind, wobei die zweite Ebene zur Lagerung von Ladungsträgern (104) ausgebildet ist und das VerteüerFahrzeug (106) zum räumlichen Versetzen der Ladungsträger (104) ausgebildet ist, wobei die erste und zweite Laufschiene (112) jeweils durch in Längsrichtung (108) hintereinander angeordnete Segmente (301; 302; 304; 308) gebildet wird, wobei durch jeweils aneinander stoßende Segmente Stoßverbindungen (308) gebildet werden, wobei die Stoßverbindungen (308) der Segmente (301; 302) der ersten Laufschiene (112) in Längsrichtung räumlich versetzt zu den Stoßverbindungen (308) der Segmente (304; 306) der zweiten Laufschiene (112) angeordnet sind.

2. Kanallager (100) nach Anspruch 1, wobei die zweite Ebene (212) über der ersten (210) Ebene angeordnet ist.

3. Kanallager (100) nach Anspruch 1 oder 2, wobei die erste Ebene (210) eine waagerechte Führungsebene (590) zur Führung der Fahrbewegung des Verteilerfahrzeugs (106) senkrecht zur Bewegungsebene des Verteilerfahrzeugs (106) und zumindest eine senkrechte Führungsebene (508) für eine seitliche Führung des Verteilerfahrzeugs (106) umfasst, wobei die zweite Ebene (212) eine Auflageebene (504) für die Ladungsträger (104) umfasst, wobei die Segmente sowohl die erste als auch die zweite Ebene (212) aufweisen.

4. Kanallager (100) nach Anspruch 3, wobei die erste (210) und zweite Ebene (212) einstückig miteinander ausgebildet sind.

5. Kanallager (100) nach einem der vorigen Ansprüche 1 bis 4, wobei die Stoßverbindungen (308) eine Schäftung aufweisen.

6. Kanallager (100) nach Anspruch 5, wobei die Schäftung durch einen Zickzackförmigen Verlauf der Stoßverbindungen (308) gebildet werden.

7. Kanallager (100) nach einem der vorigen Ansprüche 5 oder 6, ferner mit Konsolen (200), wobei die Konsolen (200) zur Fixierung der Laufschienen an Rahmenverstrebungen des Kanals ausgebildet sind.

8. Kanallager (100) nach Anspruch 7, wobei die Konsolen (200) so angeordnet sind, dass im Bereich der Stoßverbindungen (308) die jeweils aneinander stoßenden Segmente beide zumindest teilweise auf der Konsole zu liegen kommen.

9. Kanallager (100) nach Anspruch 8, wobei die Konsolen (200) scheibenförmig ausgebildet sind.

10. Kanallager (100) nach einem der vorigen Ansprüche 7 bis 9, wobei die Konsolen (200) ferner zumindest drei Befestigungspunkte (500) und eine Aussparung (502) aufweisen, wobei die Befestigungspunkte zur kraftschlüssigen Fixierung der Segmente über Profilelemente (206) und die Aussparung zur teilweisen Aufnahme von zumindest einem Segment senkrecht zur Bewegungsebene des Verteilerfahrzeugs (106) ausgebildet ist.

11. Kanallager (100) nach einem der vorigen Ansprüche 5 bis 8, wobei die erste Ebene (210) zwei senkrechte Führungsebenen (508; 512) für die seitliche Führung des Verteilerfahrzeugs (106) umfasst, wobei die waagerechte Führungsebene (510) und die zwei senkrechten Führungsebenen (508; 512) und die Auflageebene (504) durch die drei Befestigungspunkte (500) und die Aussparung (502) an den Konsolen (200) voneinander abgegrenzt festgelegt sind.

12. Kanallager (100) nach Anspruch 10 oder 11, wobei die Konsolen (200) zur formschlüssigen Anlage des Segments im montierten Zustand ausgebildet ist.

13. Segment für ein Kanallager (100) nach einem der vorigen Ansprüche 1 bis 12.

14. Konsole für ein Kanallager (100) nach einem der vorigen Ansprüche 7 bis 12.
